# EUROPÄISCHE PATENTSCHRIFT

(11) **EP 3 523 109 B1**
(45) Veröffentlichungstag und Bekanntmachung des Hinweises auf die Patenterteilung: **17.06.2020**
(21) Anmeldenummer: 17740389.6
(22) Anmeldetag: 18.07.2017
(51) Int. Cl.: B29C 45/18, B29C 45/52, B29C 45/00

(54) **SPRITZGIESSMASCHINE ZUR HERSTELLUNG VON FASERVERSTÄRKTEN KUNSTSTOFF-FORMTEILEN**
INJECTION MOULDING MACHINE FOR MANUFACTURING FIBRE-REINFORCED PLASTIC PARTS
MACHINE À MOULER PAR INJECTION POUR FABRIQUER DE CORPS MOULÉS EN PLASTIQUE RENFORCÉS PAR FIBRES

(30) Priorität: 10.10.2016 DE 102016119172
(43) Veröffentlichungstag der Anmeldung: 14.08.2019
(73) Patentinhaber: KraussMaffei Technologies GmbH, 80997 München (DE)
(72) Erfinder: SCHADHAUSER, Maximilian, 82008 Unterhaching (DE)
(74) Vertreter: Wilhelm, Ludwig
(86) Internationale Anmeldenummer: PCT/EP2017/068074
(87) Internationale Veröffentlichungsnummer: WO 2018/068913

(56) Entgegenhaltungen:
- WO-A1-00/44548
- WO-A1-2014/048666
- DE-A1- 3 147 723
- DE-A1- 3 805 849
- JP-A- S50 161 552
- JP-A- 2013 086 455
- JP-U- S4 931 976
- JP-U- S5 724 021
- KR-B1- 100 758 479
- Annonymous: "Machine translation of KR100758479 B1", , 11. Oktober 2017 (2017-10-11), Seiten 1-7, XP055414759, Gefunden im Internet: URL:http://engpat.kipris.or.kr/pmt/patent/ remoteDocFile.jsp?commKey=20171011223026&A N=1020060079124&PK=B0102&MA=K2E&FROM=EN&NA TION=KR&DOC_TYPE=UNI&FILE_TYPE=PDF#zoom=11 0 [gefunden am 2017-10-11]

## Beschreibung

Die Erfindung betrifft eine Spritzgießmaschine gemäß dem Oberbegriff von Anspruch 1.

Aus dem Stand der Technik sind gattungsgemäße Spritzgießmaschinen zur Herstellung von faserverstärkten Kunststoff-Formteilen bekannt (DE4236662C2, DE102009056653A1). Bei diesen bekannten Spritzgießmaschinen wird die mit Fasern beladende Schmelze förderabseitig der Faserzuführöffnung durch eine als Mischteil ausgelegte Rückströmsperre gefördert. Dabei sind sowohl auf der Schneckenwelle als auch auf dem Sperrring der Rückströmsperre mehrere Mischelemente vorgesehen, die miteinander zusammenwirken. Beim Aufdosieren von Schmelze durchströmt die faserbeladene Schmelze die miteinander zusammenwirkenden Mischelemente. Aus der DE4236662C2 ist es bekannt, dass das Mischteil auf der Schneckenwelle und ein dieses Mischteil umgebender Mischring, der zugleich als Sperrring dient, in gegeneinander versetzten Umfangsreihen und Axialreihen angeordnete, an ihren einander zugewandten, durch einen Ringspalt voneinander getrennten Seiten offene Mischkammern aufweisen, wobei die spaltseitigen Öffnungskanten der Mischkammern mit einem bestimmten Krümmungsradius konvex abgerundet sind. Aus der DE102009056653A1 ist es bekannt, im Bereich der Rückströmsperre eine Fasermischund -zerteileinrichtung vorzusehen, bei der eine Hülse (dort Schikanehülse genannt) auch die Sperrfunktion übernimmt und somit als Sperrring dient. Die Schikanehülse ist mit Schikanekanälen versehen, wobei jeder Schikanekanal eine Eintrittsöffnung und einer Austrittsöffnung aufweist. Auf der Schneckenwelle sind im Bereich der Schikanehülse Sperrscheiben angeordnet, die mit den Schikanekanälen zusammenwirken. Im geöffneten Zustand der Rückströmsperre, d.h. beim Aufdosieren von faserbeladener Schmelze, befinden sich die Sperrscheiben zwischen den Ein- und Austrittsöffnungen. Dies bedeutet, dass die faserbeladene Schmelze durch die Schikanekanäle strömt und nachfolgend von den Schneckenstegen der umlaufenden Schneckenwelle zerteilt wird und eine Mischwirkung erzielt wird.

Nachteilig an diesem bekannten Stand der Technik ist, dass während des Mischens die Fasern in nicht unerheblichem Maße zerteilt und gekürzt werden. Andererseits ist man häufig bestrebt, dass möglichst lange Faserstücke in dem Kunststoff-Formteil vorliegen, was sich positiv auf die mechanischen Eigenschaften des Kunststoff-Formteils auswirkt. Bei Verwendung von hochgefüllten Schmelzen ergibt sich ein erhöhter Verschleiß an den bekannten Mischelementen. Dies hat zur Folge, dass Metallischer Abrieb in das Kunststoff-Formteil gelangen und Schwachstellen in dieses einbringen kann. gleichzeitig muss infolge des Verschleißes die Mischgeometrie regelmäßig ersetzt oder nachgearbeitet werden.

Die WO 2014/048666 A1 offenbart eine Spritzgießmaschine nach dem Oberbegriff des Anspruchs 1 und austauschbare Mischelemente förderaufseitig der Rückstromsperre. Die Verwendung halbkugelförmiger Mischelemente im Bereich einer Rückstromsperre sind aus der KR 100 758 479 B1 bekannt. Aus der WO 00/44548 A1 ist bekannt, rauten- oder diamantförmige oder runde Mischelemente zu verwenden. Die DE 38 05 849 A1 zeigt Stifte als Mischteile im Zylinder, welche einen Querschnitt mit zwei gegenüberliegenden und abgerundeten Enden aufweisen.

Ausgehend hiervon liegt der Erfindung die Aufgabe zugrunde, eine Spritzgießmaschine zur Herstellung von faserverstärkten Kunststoff-Formteilen anzugeben, bei der im Vergleich zum vorgenannten Stand der Technik weniger Faserlängenabbau im Mischteil vorkommt und bei der andererseits weniger Verschleiß bei der Verarbeitung von hochgefüllten Schmelze erwartetet wird.

Die Lösung dieser Aufgabe erfolgt bei einer gattungsgemäßen Spritzgießmaschine mit den kennzeichnenden Merkmalen von Anspruch 1. Vorteilhafte Ausgestaltungen und Weiterentwicklungen sind in den abhängigen Ansprüchen angegeben.

Dadurch, dass förderabseitig von der Rückströmsperre und/oder förderaufseitig von der Rückströmsperre ein mit der Schnecke drehfest verbundenes und mit dieser mitrotierendes Mischteil vorgesehen ist, wobei das Mischteil einen zylindrischen Grundkörper aufweist, dessen Außendurchmesser kleiner ist als der Innendurchmesser des Zylinders, wobei ein Ringspalt zwischen dem Grundkörper und der Zylinderinnenwand gebildet wird, wobei auf der der Zylinderinnenwand zugewandten Oberfläche des Grundkörpers mehrere Tropfen bzw. tropfenförmige Mischelemente über den Umfang des Grundkörpers verteilt angeordnet sind, und wobei die Höhe der Tropfen über dem Grundkörper kleiner gewählt ist als die Breite des Ringspalt zwischen Grundkörper und Zylinderinnenwand, können die Fasern schonend gefördert und mit der Schmelze vermischt werden. Die Teilung und Rekombination der Schmelze erfolgt mittels der strömungsgünstigen Tropfenform. Infolge des geringen Widerstandsbeiwerts dieser Form wird die auf das Plastifikat wirkende Kraft verglichen mit anderen Mischteilgeometrien um bis zu 95%, reduziert. Dadurch wird der Faserlängenabbau im Mischteil signifikant reduziert und es kommt zu weniger Verschleiß bei der Verarbeitung von hochgefüllten Schmelzen.

Insbesondere ergibt sich zum einen eine signifikante Reduktion des sogenannten primären Faserbruchs, welcher durch die Wechselwirkung der Fasern mit schmelzeführenden Oberflächen vorkommt. Zum anderen ergibt sich eine signifikante Reduktion des sogenannten sekundären Faserbruchs, bei dem es sich um Bruch infolge der Unterschreitung des kritischen Biegeradius der Fasern bei Strömungsverwirbelungen handelt. Im Ergebnis liegen somit höhere Faserlängen in der Schmelze vor, was sich positiv auf die mechanischen Eigenschaften in dem faserverstärkten Kunststoff-Formteil auswirkt.

Ein weiterer Vorteil liegt darin, dass aufgrund der tropfenförmigen Gestalt der Mischelemente diese in geringerem Maße mechanisch beansprucht werden und somit ein reduzierter Verschleiß am Mischteil vorliegt.

Die Tropfen können vorzugsweise derart auf dem Grundkörper ausgerichtet und angeordnet sein, dass das jeweils abgerundete Ende eines Tropfens in Drehrichtung des Mischteils gesehen vorne liegt. Bei Draufsicht auf einen Tropfen ergibt sich eine Längsachse bzw. man kann eine Längsachse erkennen oder definieren, welche von dem spitzen Ende des Tropfens zu dem im Wesentlichen gegenüberliegenden, abgerundeten Ende des Tropfens verläuft oder umgekehrt. Eine solche Längsachse soll vorliegend auch als Tropfen-Längsachse bezeichnet werden. Die Anordnung der Tropfen auf dem Grundkörper kann derart sein, dass die Tropfen-Längsachse eines Tropfens mit der Längsachse der Schnecke einen Winkel von 45° bis 90° bildet. Bevorzugt soll die jeweilige Längsachse eines Tropfens mit der Längsachse der Schnecke einen Winkel von 60° bis 85°, insbesondere von 70° bis 73° bilden.

Es kann ferner vorgesehen werden, dass in Längsrichtung des Mischteils gesehen mehrere Tropfen hintereinander auf dem Grundkörper angeordnet sind und diese Tropfen somit eine Reihe von Tropfen bilden. Vorzugsweise können über den Umfang des Grundkörpers gesehen mehrere solcher Reihen von Tropfen nebeneinander angeordnet sein. Dabei kann auch vorgesehen werden, dass die Tropfen in benachbarten Reihen in Längsrichtung des Mischteils gesehen versetzt zueinander angeordnet sind. Die Reihen können auch schräg zur Längsachse der Schnecke liegen oder angeordnet sein. Dies bedeutet, dass die Längsachse einer Reihe von Tropfen mit der Längsachse der Schnecke einen Winkel bildet.

Ebenso kann vorgesehen werden, dass mehrere Tropfen eine unterschiedliche Orientierung bzw. Ausrichtung untereinander aufweisen bzw. mit unterschiedlicher Lage ihrer Tropfen-Längsachse zueinander auf dem Grundkörper angeordnet sind. Hierbei sind verschiedene Varianten denkbar. Je nach Orientierung bzw. Ausrichtung ergeben sich unterschiedliche Wirkungen auf die faserbeladene Schmelze.

Um eine pulsierende Strömung der Schmelze bewirken zu können, kann die Orientierung der Tropfenform vorzugsweise alternierend jeweils in einem Winkel größer bzw. kleiner als 90° gegenüber der Schneckenlängsachse gewählt sein. Dies bedeutet, dass die jeweilige Längsachse alternierend in einem Winkel größer bzw. kleiner als 90° zu Schneckenlängsachse liegt.

Ferner kann vorgesehen werden, dass auf dem Grundkörper Tropfen mit entgegengesetzter Ausrichtung angeordnet sind. Dies bedeutet, dass es einerseits Tropfen gibt, deren abgerundetes Ende in Drehrichtung des Mischteils gesehen vorne liegt, und dass es andererseits Tropfen gibt, deren spitzes Ende in Drehrichtung des Mischteils vorne liegt. Dies hat zur Folge, dass möglicherweise nahezu endlos verbliebene, d.h. nahezu ungekürzte, Faserbündel durch die entgegengesetzt orientierten Tropfen auf eine Länge eingekürzt werden, bei der die übrigen Tropfen ihre homogenisierende Wirkung entfalten können. Würden die Faserbündel nahezu ungekürzt durch das Mischteil in das Kunststoff-Formteil gefördert werden, könnten Schwachstellen und lokale Schwankungen der Faserkonzentration in dem Kunststoff-Formteil vorkommen. Anstelle der Tropfen mit entgegengesetzter Ausrichtung können auch andere Formen von Mischelementen vorgesehen werden, mit denen eine Verkürzung von Faserbündeln erzielt werden kann. Bevorzugt könnten dies rautenförmige Mischelemente sein, wobei die Längsachse eines rautenförmigen Mischelements derart ausgerichtet ist, dass es in Drehrichtung des Mischteils gesehen eine vordere und eine hintere Spitze gibt.

Damit die faserbeladene Schmelze im Unterschied zum eingangs genannten Stand der Technik nicht in der Rückströmsperre einer Mischung und Zerteilung der Fasern unterworfen wird, kann die Schneckenwelle im Bereich der Rückströmsperre vorzugsweise eine glatte Oberfläche aufweisen.

Besonders bevorzugt kann die Rückströmsperre als Ringrückströmsperre ausgebildet sein und einen im Wesentlichen hülsenförmigen Sperrring umfassen, welcher auf seiner Innenseite eine glatte Oberfläche aufweist.

Im Bedarfsfall können bei der Rückströmsperre anstelle von glatten Oberflächen aber auch Scherkanten vorgesehen sein, wobei entweder der Schaft und/oder der Sperrring mit geeigneten Scherkanten ausgebildet sein können. Technisch gesehen ist die Idee dahinter die, dass endlose Fasern nicht so gut eingemischt werden können wie Langfasern. Die Vorzerteilung endloser Fasern in der Rückströmsperre kann also unter Umständen vorteilhaft sein, damit das anschließende erfindungsgemäße Mischteil optimal wirken kann.

Um einen guten Mischeffekt erzielen zu können, kann die Höhe der Tropfen auf der Oberseite des Grundkörpers vorzugsweise so gewählt sein, dass die Oberseite der Tropfen von der Zylinderinnenwand nur geringfügig beabstandet ist. Dieser Abstand kann im Bereich von 0,1% bis 1% des Zylinderinnendurchmessers, vorzugsweise im Bereich von 0,2% bis 0,5% des Zylinderinnendurchmessers liegen. Man kann die Höhe der Tropfen über dem Grundkörper aber auch in Abhängigkeit des Ringspalts zwischen dem Grundkörper und der Zylinderinnenwand einstellen. Anders ausgedrückt bedeutet dies, dass sich die Tropfen ausgehend von dem Grundkörper in radialer Richtung von dem Grundkörper weg erstrecken und dabei entsprechend einem bestimmten Prozentsatz in den Ringspalt hineinragen.

Nachfolgend soll die Erfindung anhand von Ausführungsbeispielen und unter Bezugnahme auf die Figuren 1 bis 8 näher beschrieben werden. Es zeigen:
- Figur 1: eine erfindungsgemäße Spritzgießmaschine;
- Figur 2A: eine erste Ausführungsform eines erfindungsgemäßen Mischteils in perspektivischer Ansicht;
- Figur 2B: eine erste Ausführungsform eines erfindungsgemäßen Mischteils in Seitenansicht;
- Figur 3A: eine zweite Ausführungsform eines erfindungsgemäßen Mischteils in perspektivischer Ansicht;
- Figur 3B: eine zweite Ausführungsform eines erfindungsgemäßen Mischteils in Seitenansicht;
- Figur 4A: eine dritte Ausführungsform eines erfindungsgemäßen Mischteils in perspektivischer Ansicht (Orientierung gemäß bevorzugtem Winkel);
- Figur 4B: eine dritte Ausführungsform eines erfindungsgemäßen Mischteils in Seitenansicht (Orientierung gemäß bevorzugtem Winkel);
- Figur 5A: eine vierte Ausführungsform eines erfindungsgemäßen Mischteils in perspektivischer Ansicht (unterschiedliche Tropfenorientierung - erste Variante);
- Figur 5B: eine vierte Ausführungsform eines erfindungsgemäßen Mischteils in Seitenansicht (unterschiedliche Tropfenorientierung - erste Variante);
- Figur 6A: eine fünfte Ausführungsform eines erfindungsgemäßen Mischteils in perspektivischer Ansicht (Tropfenform alternierend mit anderen Mischgeometrien);
- Figur 6B: eine fünfte Ausführungsform eines erfindungsgemäßen Mischteils in Seitenansicht (Tropfenform alternierend mit anderen Mischgeometrien);
- Figur 7A: eine sechste Ausführungsform eines erfindungsgemäßen Mischteils in perspektivischer Ansicht (unterschiedliche Tropfenorientierung - zweite Variante);
- Figur 7B: eine sechste Ausführungsform eines erfindungsgemäßen Mischteils in Seitenansicht (unterschiedliche Tropfenorientierung - zweite Variante);
- Figur 8: eine vergrößerte Darstellung des vorderen Endabschnitts der Schnecke mit einer entsprechend vergrößerten Darstellung von Rückströmsperre und Mischteil.

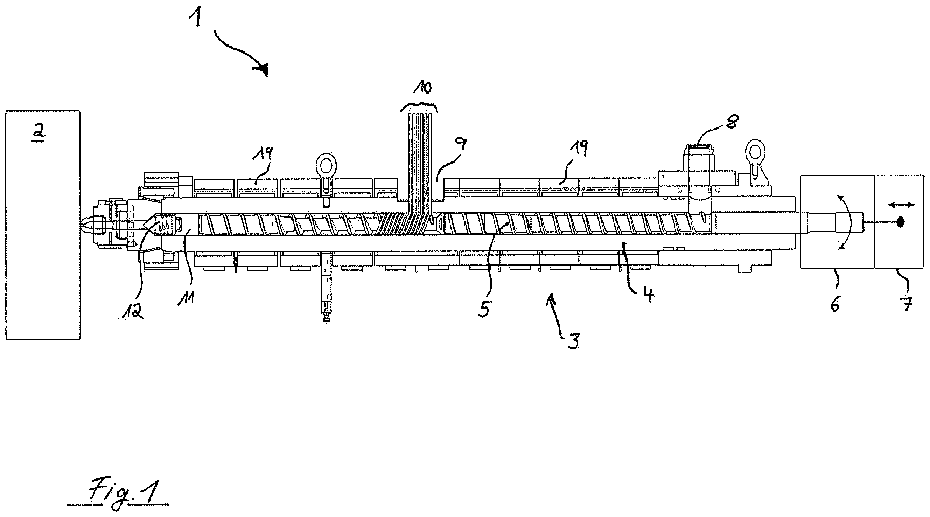

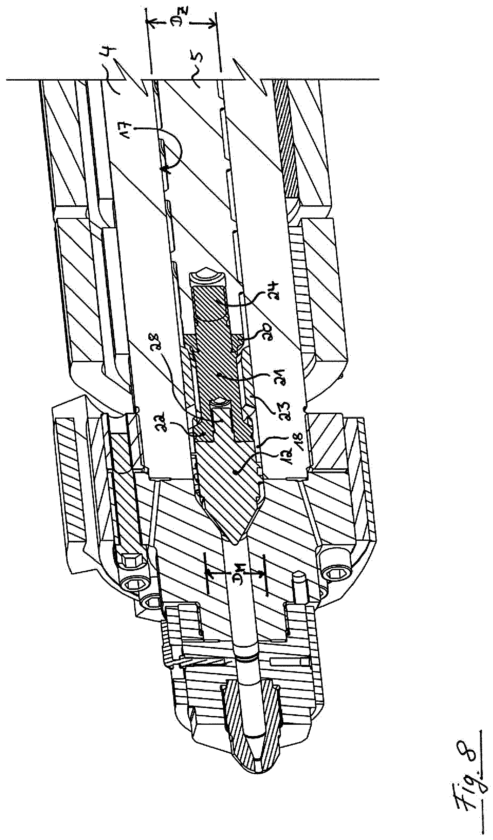

Die in der Figur 1 dargestellte Spritzgießmaschine 1 umfasst im Wesentlichen eine vorliegend nur schematisch angedeutete Schließeinheit 2 sowie eine Spritzeinheit 3. Schließeinheit 1 und Spritzeinheit 3 sind in an sich bekannter Weise auf einem hier nicht dargestellten Maschinenbett angebracht. Die Spritzeinheit 3 umfasst einen Zylinder 4 mit einer Schnecke 5. Auf der Außenseite des Zylinders 4 sind mehrere Heizelemente 19 angebracht. Das hintere Ende der Schnecke 5 ist mit einem Drehantrieb 6 und einem Linearantrieb 7 wirkverbunden. Im hinteren Endbereich der Schneckengänge ist eine erste Öffnung als Einfüllöffnung 8 für die Zufuhr eines aufzuschmelzenden Kunststoffmaterials vorgesehen. Förderabseitig von der ersten Öffnung 8 ist in dem Zylinder 4 eine zweite Öffnung als Einfüllöffnung 9 für die Zufuhr eines Fasermaterials 10 vorgesehen. Am vorderen Ende weist die Schnecke 5 eine Rückströmsperre 11 auf. Förderabseitig von der Rückströmsperre 11 ist ein mit der Schnecke 5 drehfest verbundenes und mit dieser mitrotierendes Mischteil 12 vorgesehen. Die Figur 8 zeigt eine vergrößerte Darstellung des vorderen Endabschnitts der Schnecke 5 mit einer entsprechend vergrößerten Darstellung von Rückströmsperre 11 und Mischteil 12.

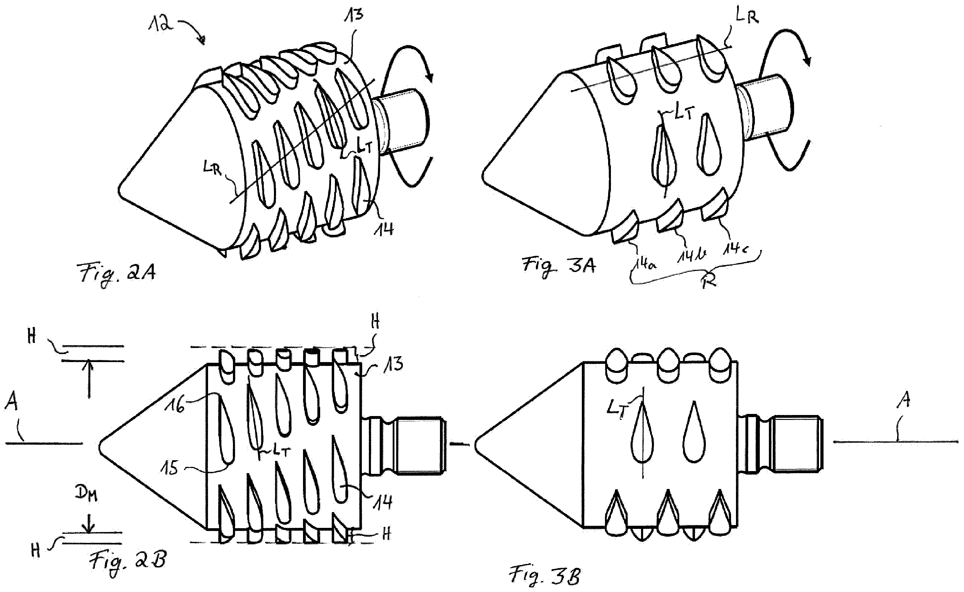

Unter Bezugnahme auf die Figuren 2A bis 7B und in Verbindung mit der Figur 8 sollen nachfolgend verschiedene Ausführungsformen von erfindungsgemäßen Mischteilen näher beschrieben werden.

Wie den Figuren 2A und 2B sowie der Figur 8 zu entnehmen ist, weist das Mischteil 12 einen zylindrischen Grundkörper 13 auf, dessen Außendurchmesser D_{M} kleiner ist als der Innendurchmesser D_{Z} des Zylinders 4, wobei ein Ringspalt 18 zwischen dem Grundkörper 13 und der Zylinderinnenwand 17 gebildet wird. Auf der der Zylinderinnenwand 17 zugewandten Oberfläche des Grundkörpers 13 sind mehrere tropfenförmige Mischelemente (Tropfen) über den Umfang des Grundkörpers 13 verteilt angeordnet. Die Höhe H der tropfenförmigen Mischelemente 14 über dem Grundkörper 13 ist kleiner gewählt als der Ringspalt 18 zwischen dem Grundkörper 13 und der Zylinderinnenwand 17. Die Tropfen 14 sind dabei derart ausgerichtet auf dem Grundkörper angeordnet, dass das jeweils abgerundete Ende 15 eines Tropfens in Drehrichtung des Mischteils gesehen vorne liegt und das gegenüberliegende spitze Ende 16 hinten. Bei Draufsicht auf einen Tropfen 14 kann man eine Längsachse L_{T} festlegen, welche von dem spitzen Ende 16 des Tropfens zu dem im Wesentlichen gegenüberliegenden, abgerundeten Ende 15 des Tropfens verläuft oder umgekehrt. Die Anordnung der Tropfen 14 auf dem Grundkörper 13 ist derart, dass die jeweilige Längsachse L_{T} eines Tropfens 14 mit der Längsachse A der Schnecke einen Winkel von 45° bis 90° bildet. Bevorzugt liegen die Winkel im Bereich von 60° bis 85° und besonders bevorzugt im Bereich von 70° bis 73°. Die Figuren 2A und 2B zeigen eine Ausführungsform, bei der der Winkel etwas kleiner ist als 90° und die Figuren 3A und 3B zeigen eine Ausführungsform mit einem Winkel von 90°.

In Längsrichtung des Mischteils 12 gesehen sind in der Regel mehrere Tropfen 14 hintereinander auf dem Grundkörper 13 angeordnet. Dadurch wird eine Reihe R von Tropfen 14 gebildet. Als Beispiel sei die Reihe R mit den Tropfen 14a, 14b und 14c in der Figur 3A genannt. Üblicherweise sind über den Umfang des Grundkörpers gesehen mehrere solcher Reihen R von Tropfen nebeneinander angeordnet, wie dies in den hier gezeigten Ausführungsbeispielen gezeigt ist.

Die Tropfen in benachbarten Reihen können in Längsrichtung des Mischteils gesehen versetzt zueinander angeordnet sein, wie dies in den Figuren 3A und 3B gezeigt ist. Ferner ist es möglich, dass die Längsachse L_{R} der Reihen von Tropfen mit der Längsachse A der Schnecke einen Winkel bildet, wie dies in den Figuren 2A und 2B der Fall ist.

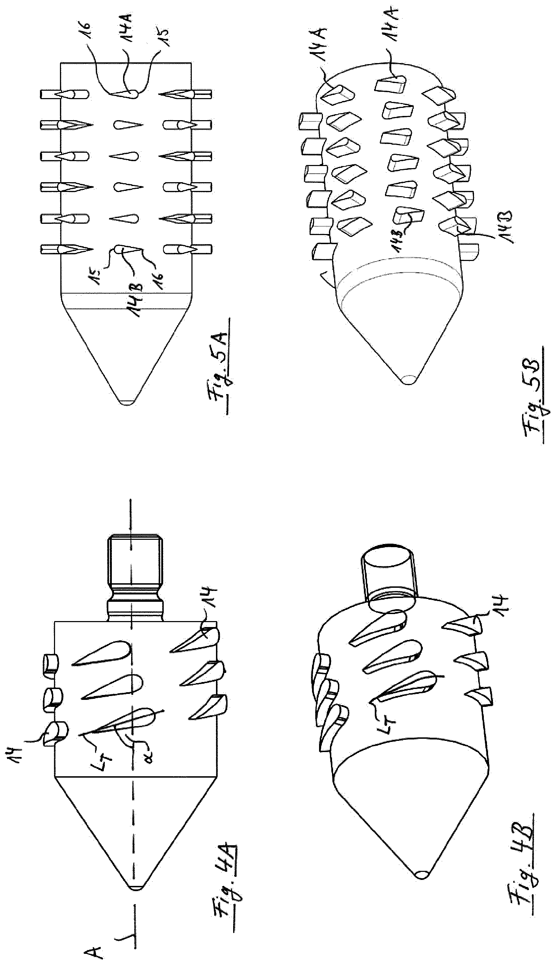

Die Figuren 4A und 4B zeigen eine Ausführungsform mit einem Winkel im besonders bevorzugten Bereich, vorliegend von 71,5°. Dies bedeutet, dass die Längsachse L_{T} der Tropfen 14 mit der Längsachse A der Schnecke einen Winkel von α = 71,5° einschließen.

Die Figuren 5A und 5B zeigen eine Ausführungsform mit unterschiedlicher Orientierung der Tropfen. Es gibt eine erste Gruppe von Tropfen mit dem Bezugszeichen 14A, welche wie in den oben beschriebenen Ausführungsbeispielen ausgerichtet sind. Dies bedeutet, dass das jeweils abgerundete Ende 15 eines Tropfens 14A in Drehrichtung des Mischteils gesehen vorne liegt und das gegenüberliegende spitze Ende 16 hinten. In Umfangsrichtung gesehen liegen mehrere Tropfen 14A hintereinander auf einer Linie und bilden zusammen einen Kreis von Tropfen 14A. Zusätzlich gibt es eine zweite Gruppe von Tropfen mit dem Bezugszeichen 14B, welche entgegengesetzt zu den Tropfen 14B ausgerichtet sind. Dies bedeutet, dass das jeweils spitze Ende 16 eines Tropfens 14B in Drehrichtung des Mischteils gesehen vorne liegt und das gegenüberliegende abgerundete Ende 15 hinten. In Umfangsrichtung gesehen liegen mehrere Tropfen 14B hintereinander auf einer Linie und bilden zusammen einen Kreis von Tropfen 14B. Eine solche Anordnung von Tropfen 14A und 14B hat zur Folge, dass möglicherweise nahezu endlos verbliebene, d.h. nahezu ungekürzte, Faserbündel durch die entgegengesetzt orientierten Tropfen 14B auf eine Länge eingekürzt werden, bei der die übrigen Tropfen 14A ihre homogenisierende Wirkung entfalten können. Würden die Faserbündel nahezu ungekürzt durch das Mischteil in das Kunststoff-Formteil gefördert werden, wären Schwachstellen und lokale Schwankungen der Faserkonzentration in dem Kunststoff-Formteil die Folge. Im vorliegenden Beispiel wechseln sich Kreise mit Tropfen 14A und Kreise mit Tropfen 14B ab. Im Bedarfsfall kann aber auch eine andere Reihenfolge der Kreise und/oder eine andere Anordnung der Tropfen 14A und 14B auf einem Kreis als diejenige aus den Figuren 5A und 5B gewählt werden,

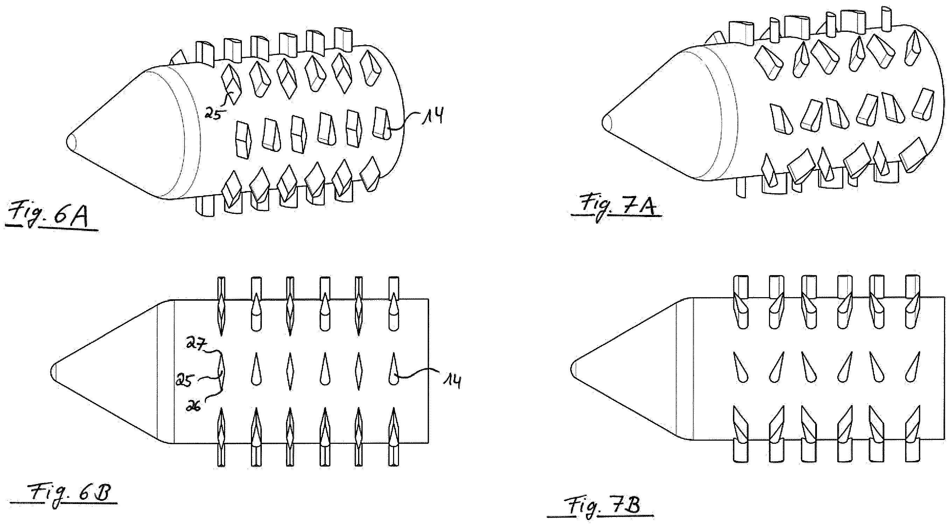

Die Figuren 6A und 6B zeigen eine Ausführungsform, bei der tropfenförmige Mischelemente 14 alternierend mit einer anderen Form von Mischelementen angeordnet sind. In den Figuren 6A und 6B ist sind rautenförmige Mischelemente 25 als bevorzugte Ausführungsform dieser anderen Form von Mischelement bzw. Mischgeometrie abgebildet. Die Anordnung der rautenförmigen Mischelemente 25 ist dergestalt, dass es in Drehrichtung des Mischteils gesehen eine vordere Spitze 26 und eine hintere Spitze 27 gibt. Die Wirkung ist vergleichbar mit der in den Figuren 5A und 5B genannten Ausführungsform. Dies bedeutet, dass es auch mit der Ausführungsform gemäß den Figuren 6A und 6B möglich ist, Faserbündel durch die vorderen Spitzen 26 zu kürzen. Die Ausführungsform gemäß den Figuren 6A und 6B hat den Vorteil, dass sie mit geringeren Kosten hergestellt werden kann als die Ausführungsform gemäß den Figuren 5A und 5B., In Bezug auf die Figuren 6A und 6B gilt das zu den Figuren 5A und 5B Gesagte in Bezug auf die Reihenfolge der Kreise mit Tropfen 14 und Rauten 25 sowie der Anordnung der Tropfen 14 und der Rauten 25 auf einem Kreis für sich genommen. Im Bedarfsfall kann also auch eine andere Reihenfolge der Kreise und/oder eine andere Anordnung der Mischelemente auf einem Kreis als diejenige aus den Figuren 6A und 6B gewählt werden.

Die Figuren 7A und 7B zeigen eine Ausführungsform, bei der die Orientierung der Tropfenform alternierend jeweils in einem Winkel größer bzw. kleiner als 90° gegenüber der Schneckenlängsachse A gewählt ist. Dies bedeutet, dass die jeweilige Längsachse L_{T} alternierend in einem Winkel größer bzw. kleiner als 90° zu Schneckenlängsachse A liegt. Mit einer solchen Anordnung der Tropfen kann eine pulsierende Strömung erzielt werden. Dies hat zur Folge, dass die faserbeladene Schmelze pulsierenderweise verschiedene Druckniveaus durchläuft und infolge der dadurch erzeugten Dehnströmung möglicherweise verbliebene Fasercluster schonend aufgelöst werden.

Aus der Figur 8 ist zunächst ersichtlich, dass die Rückströmsperre 11 als Ringrückströmsperre ausgebildet ist. Diese umfasst folgende Bauelemente (von hinten nach vorne gesehen): Druckring 20, Schaft 21, Kopf 22 und Sperrring 23. Zur Befestigung in der Schneckenwelle ist ein Gewinde 24 vorgesehen, das in ein passendes Gewinde der Schneckenwelle bzw., der Schnecke 5 eingeschraubt werden kann. Im Unterschied zum eingangs genannten Stand der Technik (DE4236662C2, DE102009056653A1) weisen sowohl die Schneckenwelle im Bereich der Rückströmsperre 11, d.h. der Schaft 21 der Rückströmsperre, als auch der Sperrring 23 auf seiner Innenseite jeweils eine glatte Oberfläche auf. Das Mischteil 12 ist förderabseitig der Rückströmsperre 11 drehfest mit der Schnecke 5 verbunden. Im vorliegenden Ausführungsbeispiel ist das Mischteil mittels eines Zapfens 28 in einer passenden Ausnehmung im Kopf 22 der Rückströmsperre 11 befestigt.
Ferner ist aus der Figur 8 ersichtlich, wie das Mischteil 12 in Bezug auf die Zylinderinnenwand 17 ausgebildet ist. Das Mischteil 12 weist einen zylindrischen Grundkörper 13 (siehe Figur 2B) auf, dessen Außendurchmesser D_{M} kleiner ist als der Innendurchmesser D_{Z} des Zylinders 4, wobei ein Ringspalt 18 zwischen dem Grundkörper und der Zylinderinnenwand 17 gebildet wird. Wie aus den Figuren 2A bis 7B ersichtlich ist, sind auf der der Zylinderinnenwand 17 zugewandten Oberfläche des Grundkörpers 13 mehrere tropfenförmige Mischelemente bzw. Tropfen 14 über den Umfang des Grundkörpers 13 verteilt angeordnet. Die Höhe H der tropfenförmigen Mischelemente 14 über dem Grundkörper 13 ist kleiner gewählt als der Ringspalt 18 zwischen dem Grundkörper 13 und der Zylinderinnenwand 17.

Die Höhe H der Tropfen 14 auf der Oberseite des Grundkörpers 13 sollte vorzugsweise so gewählt sein, dass die Oberseite der Tropfen von der Zylinderinnenwand 17 nur geringfügig beabstandet ist. Dieser Abstand kann im Bereich von 0,02 bis 2 mm, vorzugsweise im Bereich von 0,1 bis 0,5.mm liegen. Man kann die Höhe der Tropfen 14 über dem Grundkörper 13 aber auch in Abhängigkeit von der Größe des Ringspalts 18 zwischen Grundkörper und Zylinderinnenwand einstellen. Vorzugsweise sollte die Höhe der Tropfen 14 über dem Grundkörper 13 96% der Breite B des Ringspalts 18 betragen. Anders ausgedrückt bedeutet dies, dass sich die Tropfen 14 ausgehend von dem Grundkörper 13 in radialer Richtung von dem Grundkörper weg erstrecken und dabei entsprechend dem vorgenannten Prozentsatz in den Ringspalt 18 hineinragen.

In dem vorliegenden Ausführungsbeispiel ist das Mischteil förderabseitig von der Rückströmsperre angeordnet. Das Mischteil kann aber auch förderaufseitig von der Rückströmsperre angeordnet sein. Gegebenenfalls kann auch zu beiden Seiten der Rückströmsperre ein erfindungsgemäßes Mischteil angeordnet sein. Dabei können gleiche oder unterschiedliche Mischteile verwendet werden.

Weitere Einzelheiten der Spritzgießmaschine an sich sind dem Fachmann bekannt und brauchen daher an dieser Stelle nicht näher beschrieben zu werden.

**Bezugszeichenliste**

| | |
|---|---|
| 1 | Spritzgießmaschine |
| 2 | Schließeinheit |
| 3 | Spritzeinheit |
| 4 | Zylinder |
| 5 | Schnecke |
| 6 | Drehantrieb |
| 7 | Linearantrieb |
| 8 | Erste Einfüllöffnung - Kunststoffmaterial |
| 9 | Zweite Einfüllöffnung - Fasermaterial |
| 10 | Fasern |
| 11 | Rückströmsperre |
| 12 | Mischteil |
| 13 | Grundkörper |
| 14 | Tropfen |
| 14A | Tropfen mit Ausrichtung in Drehrichtung des Mischteils |
| 14B | Tropfen mit Ausrichtung entgegen der Drehrichtung des Mischteils |
| 15 | Vorderes, rundes Ende eines Tropfens |
| 16 | Hinteres, spitzes Ende eines Tropfens |
| 17 | Zylinderinnenwand |
| 18 | Ringspalt |
| 19 | Heizelement |
| 20 | Druckring |
| 21 | Schaft |
| 22 | Kopf |
| 23 | Sperrring |
| 24 | Gewinde |
| 25 | Rautenförmiges Mischelement |
| 26 | Vordere Spitze |
| 27 | Hintere Spitze |
| 28 | Zapfen |
| A | Längsachse der Schnecke |
| D_{M} | Außendurchmesser des Grundkörpers |
| D_{Z} | Innendurchmesser des Zylinders |
| H | Höhe eines Tropfens über dem Grundkörper |
| L_{T} | Tropfen-Längsachse |
| L_{R} | Reihen-Längsachse |
| R | Tropfenreihe in Längsrichtung des Mischteils |

## Patentansprüche

1. Spritzgießmaschine (1) zur Herstellung von faserverstärkten Kunststoff-Formteilen, mit einer Schließeinheit (2) und einer Spritzeinheit (3), wobei die Spritzeinheit (3) einen Zylinder (4) und eine in dem Zylinder (4) drehbare und in Längsrichtung des Zylinders (4) verschiebbare Schnecke (5) aufweist, wobei in dem Zylinder (4) eine erste Öffnung (8) als Einfüllöffnung für die Zufuhr eines aufzuschmelzenden Kunststoffmaterials vorgesehen ist, wobei förderabseitig von der ersten Öffnung (8) in dem Zylinder (4) eine zweite Öffnung (9) als Einfüllöffnung für die Zufuhr eines Fasermaterials vorgesehen ist, und wobei die Schnecke (5) eine Rückströmsperre (11) aufweist,
**dadurch gekennzeichnet, dass**
förderabseitig von der Rückströmsperre (11) und/oder förderaufseitig von der Rückströmsperre (11) ein mit der Schnecke (5) drehfest verbundenes und mit dieser mitrotierendes Mischteil (12) vorgesehen ist, dass das Mischteil (12) einen zylindrischen Grundkörper (13) aufweist, dessen Außendurchmesser (D_{M}) kleiner ist als der Innendurchmesser (D_{Z}) des Zylinders (4), wobei ein Ringspalt (18) zwischen dem Grundkörper (13) und der Zylinderinnenwand (17) gebildet wird, dass auf der der Zylinderinnenwand (17) zugewandten Oberfläche des Grundkörpers (13) mehrere Tropfen (14) als tropfenförmige Mischelemente (14) über den Umfang des Grundkörpers (13) verteilt angeordnet sind, wobei bei Draufsicht auf einen Tropfen (14) eine Tropfen-Längsachse (L_{T}) vorliegt, welche von dem spitzen Ende (16) des Tropfens (14) zu dem im Wesentlichen gegenüberliegenden, abgerundeten Ende (15) des Tropfens (14) verläuft, und dass die Höhe (H) der Tropfen (14) über dem Grundkörper (13) kleiner gewählt ist als die Breite (B) des Ringspalt (18) zwischen dem Grundkörper (13) und der Zylinderinnenwand (17).

2. Spritzgießmaschine nach Anspruch 1,
**dadurch gekennzeichnet, dass**
die Tropfen (14) derart ausgerichtet auf dem Grundkörper (13) angeordnet sind, dass das jeweils abgerundete Ende (15) eines Tropfens (14) in Drehrichtung des Mischteils (12) gesehen vorne liegt.

3. Spritzgießmaschine nach einem der vorstehenden Ansprüche,
**dadurch gekennzeichnet, dass**
die jeweilige Tropfen-Längsachse (L_{T}) eines Tropfens (14) mit der Längsachse (A) der Schnecke (5) einen Winkel α von 45° bis 90° bildet.

4. Spritzgießmaschine nach Anspruch 3,
**dadurch gekennzeichnet, dass**
die jeweilige Tropfen-Längsachse (L_{T}) eines Tropfens (14) mit der Längsachse der Schnecke (A) einen Winkel α von 60° bis 85°, vorzugsweise von 70° bis 73° bildet.

5. Spritzgießmaschine nach einem der vorstehenden Ansprüche,
**dadurch gekennzeichnet, dass**
in Längsrichtung des Mischteils (12) gesehen mehrere Tropfen (14) hintereinander auf dem Grundkörper (13) angeordnet sind und diese Tropfen (14) eine Reihe (R) von Tropfen (14a, 14b, 14c) bilden, und dass über den Umfang des Grundkörpers (13) gesehen mehrere solcher Reihen (R) von Tropfen (14) nebeneinander angeordnet sind.

6. Spritzgießmaschine nach Anspruch 5,
**dadurch gekennzeichnet, dass**
die Tropfen (14) in benachbarten Reihen (R) in Längsrichtung des Mischteils (12) gesehen versetzt zueinander angeordnet sind.

7. Spritzgießmaschine nach Anspruch 5 oder 6,
**dadurch gekennzeichnet, dass**
die Längsachse (L_{R}) der Reihen von Tropfen (14) mit der Längsachse (A) der Schnecke (5) einen Winkel bildet.

8. Spritzgießmaschine nach Anspruch 1 ,
**dadurch gekennzeichnet, dass**
mehrere Tropfen (14) eine unterschiedliche Orientierung untereinander aufweisen bzw. mit unterschiedlicher Lage ihrer Tropfen-Längsachse (L_{T}) zueinander auf dem Grundkörper (13) angeordnet sind.

9. Spritzgießmaschine nach Anspruch 8,
**dadurch gekennzeichnet, dass**
die Orientierung der Tropfen (14) alternierend jeweils in einem Winkel größer bzw. kleiner als 90° gegenüber der Schneckenlängsachse (A) gewählt ist derart, dass die jeweilige Längsachse (L_{T}) der Tropfen (14) alternierend einmal in einem Winkel größer und einmal in einem Winkel kleiner als 90° zu Schneckenlängsachse (A) liegt.

10. Spritzgießmaschine nach Anspruch 8,
**dadurch gekennzeichnet, dass**
auf dem Grundkörper (13) Tropfen (14A, 14B) mit entgegengesetzter Ausrichtung angeordnet sind, wobei es einerseits Tropfen (14A) gibt, deren abgerundetes Ende (15) in Drehrichtung des Mischteils (12) gesehen vorne liegt, und wobei es andererseits Tropfen (14B) gibt, deren spitzes Ende (16) in Drehrichtung des Mischteils (12) gesehen vorne liegt.

11. Spritzgießmaschine nach einem der vorstehenden Ansprüche,
**dadurch gekennzeichnet, dass**
die Schneckenwelle im Bereich der Rückströmsperre (11) eine glatte Oberfläche aufweist oder dass der Schaft (21) der Rückströmsperre (11) eine glatte Oberfläche aufweist.

12. Spritzgießmaschine nach einem der vorstehenden Ansprüche,
**dadurch gekennzeichnet, dass**
die Rückströmsperre (11) als Ringrückströmsperre ausgebildet ist und einen im Wesentlichen hülsenförmigen Sperrring (23) aufweist, und dass der Sperrring (23) auf seiner Innenseite eine glatte Oberfläche aufweist.

13. Spritzgießmaschine nach einem der vorstehenden Ansprüche,
**dadurch gekennzeichnet, dass**
die Höhe (H) der Tropfen (14) so gewählt ist, dass die Oberseite der Tropfen (14) von der Zylinderinnenwand (17) geringfügig beabstandet ist, wobei vorzugsweise der Abstand zwischen der Oberseite der Tropfen (14) und der Zylinderinnenwand (17) im Bereich von 0,02 bis 2 mm liegt, insbesondere im Bereich von 0,1 bis 0,5 mm.

14. Spritzgießmaschine nach Anspruch 13,
**dadurch gekennzeichnet, dass**
die Höhe (H) der Tropfen (14) 80% - 99 % der Breite (B) des Ringspalts (18) zwischen Grundkörper (13) und Zylinderinnenwand (17) beträgt.

15. Spritzgießmaschine nach einem der vorstehenden Ansprüche,
**dadurch gekennzeichnet, dass**
zusätzlich zu den tropfenförmigen Mischelementen (14) weitere Mischelemente mit einer anderen Form vorgesehen sind, insbesondere rautenförmige Mischelemente (25), wobei vorzugsweise in Längsrichtung des Mischteils (12) gesehen alternierend tropfenförmige Mischelemente (14) und Mischelemente mit der anderen Form vorgesehen sind, insbesondere rautenförmige Mischelemente (25).

## Claims

1. An injection moulding machine (1) for manufacturing fibre-reinforced plastic parts, with a closing unit (2) and an injection unit (3), wherein the injection unit (3) has a cylinder (4) and a screw (5) which is rotatable in the cylinder (4) and is displaceable in longitudinal direction of the cylinder (4), wherein in the cylinder (4) a first opening (8) is provided as filling opening for feeding in a plastic material which is to be melted, wherein downstream of the first opening (8) in the cylinder (4) a second opening (9) is provided as filling opening for the feeding in of a fibre material, and wherein the screw (5) has a backflow stop (11),
**characterized in that**
downstream of the backflow stop (11) and/or upstream of the backflow stop (11) a mixing part (12) is provided which is connected with the screw (5) in a rotationally fixed manner and corotating therewith, that the mixing part (12) has cylindrical main body (13), the outer diameter (D_{M}) of which is smaller than the inner diameter (D_{Z}) of the cylinder (4), wherein an annular gap (18) is formed between the main body (13) and the cylinder inner wall (17), that on the surface of the main body (13) facing the cylinder inner wall (17) several drops (14) as drop-shaped mixing elements (14) are arranged distributed over the circumference of the main body (13), wherein in top view onto a drop (14) a drop longitudinal axis (L_{T}) is present, which runs from the pointed end (16) of the drop (14) to the substantially opposite, rounded end (15) of the drop (14), and that the height (H) of the drops (14) over the main body (13) is selected to be smaller than the width (B) of the annular gap (18) between the main body (13) and the cylinder inner wall (17).

2. The injection moulding machine according to Claim 1,
**characterized in that**
the drops (14) are arranged in an aligned manner on the main body (13) in such a way that the respectively rounded end (15) of a drop (14) lies at the front, viewed in rotation direction of the mixing part (12).

3. The injection moulding machine according to one of the preceding claims,
**characterized in that**
the respective drop longitudinal axis (L_{T}) of a drop (14) forms with the longitudinal axis (A) of the screw (5) an angle a of 45° to 90°.

4. The injection moulding machine according to Claim 3,
**characterized in that**
the respective drop longitudinal axis (L_{T}) of a drop (14) forms with the longitudinal axis of the screw (A) an angle a of 60° to 85°, preferably of 70° to 73°.

5. The injection moulding machine according to one of the preceding claims,
**characterized in that**
viewed in longitudinal direction of the mixing part (12), several drops (14) are arranged one behind another on the main body (13), and these drops (14) form a row (R) of drops (14a, 14b, 14c), and that viewed over the circumference of the main body (13) several such rows (R) of drops (14) are arranged adjacent to one another.

6. The injection moulding machine according to Claim 5,
**characterized in that**
the drops (14) in adjacent rows (R) viewed in longitudinal direction of the mixing part (12) are arranged offset with respect to one another.

7. The injection moulding machine according to Claim 5 or 6,
**characterized in that**
the longitudinal axis (L_{R}) of the rows of drops (14) forms an angle with the longitudinal axis (A) of the screw (5).

8. The injection moulding machine according to Claim 1,
**characterized in that**
several drops (14) have a different orientation with respect to one another or respectively are arranged with a different position of their drop longitudinal axis (L_{T}) with respect to one another on the main body (13).

9. The injection moulding machine according to Claim 8,
**characterized in that**
the orientation of the drops (14) is selected alternating respectively in an angle greater or respectively smaller than 90° with respect to the screw longitudinal axis (A), in such a way that the respective longitudinal axis (L_{T}) of the drops (14) lies alternating one time in an angle greater than and one time in an angle smaller than 90° to screw longitudinal axis (A).

10. The injection moulding machine according to Claim 8,
**characterized in that**
on the main body (13) drops (14A, 14B) are arranged with opposed alignment, wherein on the one hand there are drops (14A), the rounded end (15) of which lies at the front, viewed in rotation direction of the mixing part (12), and wherein on the other hand there are drops (14B), the pointed end (16) of which lies at the front, viewed in rotation direction of the mixing part (12).

11. The injection moulding machine according to one of the preceding claims,
**characterized in that**
the screw shaft has a smooth surface in the region of the backflow stop (11) or that the shaft (21) of the backflow stop (11) has a smooth surface.

12. The injection moulding machine according to one of the preceding claims,
**characterized in that**
the backflow stop (11) is formed as a ring backflow stop and has a substantially sleeve-shaped blocking ring (23), and that the blocking ring (23) has a smooth surface on its inner side.

13. The injection moulding machine according to one of the preceding claims,
**characterized in that**
the height (H) of the drops (14) is selected so that the upper side of the drops (14) is spaced apart slightly from the cylinder inner wall (17), wherein preferably the distance between the upper side of the drops (14) and the cylinder inner wall (17) lies in the range of 0.02 to 2 mm, in particular in the range of 0.1 to 0.5 mm.

14. The injection moulding machine according to Claim 13,
**characterized in that**
the height (H) of the drops (14) is 80 % - 99 % of the width (B) of the annular gap (18) between main body (13) and cylinder inner wall (17).

15. The injection moulding machine according to one of the preceding claims,
**characterized in that**
in addition to the drop-shaped mixing elements (14), further mixing elements are provided with a different shape, in particular diamond-shaped mixing elements (25), wherein preferably, viewed in longitudinal direction of the mixing part (12), drop-shaped mixing elements (14) and mixing elements with the other shape, in particular diamond-shaped mixing elements (25), are provided in an alternating manner.

## Revendications

1. Machine à mouler par injection (1) pour fabriquer des corps moulés en plastique renforcés par fibres, comprenant une unité de fermeture (2) et une unité d'injection (3), dans laquelle l'unité d'injection (3) présente un cylindre (4) et une vis sans fin (5) pouvant tourner dans le cylindre (4) et pouvant se déplacer dans le sens longitudinal du cylindre (4), dans laquelle une première ouverture (8) est prévue dans le cylindre (4) en tant qu'ouverture de remplissage pour l'alimentation d'un matériau plastique à fondre, dans laquelle en aval du transport de la première ouverture (8) dans le cylindre (4), une seconde ouverture (9) est prévue en tant qu'ouverture de remplissage pour l'alimentation d'un matériau de fibres et dans laquelle la vis sans fin (5) présente un anti-retour (11),
**caractérisée en ce**
**qu'**en aval du transport de l'anti-retour (11) et/ou en amont du transport de l'anti-retour (11), une partie de mélange (12) reliée fixe en rotation avec la vis sans fin (5) et tournant conjointement avec celle-ci est prévue, que la partie de mélange (12) présente un corps de base cylindrique (13) dont le diamètre extérieur (D_{M}) est inférieur au diamètre intérieur (D_{Z}) du cylindre (4), dans laquelle une fente annulaire (18) est formée entre le corps de base (13) et la paroi intérieure de cylindre (17), que sur la surface du corps de base (13) orientée vers la paroi intérieur de cylindre (17), plusieurs gouttes (14) sont réparties sur le pourtour du corps de base (13), en tant qu'éléments de mélange (14) en forme de gouttes, dans laquelle en vue de dessus sur une goutte (14), il y a un axe longitudinal de goutte (L_{T}) qui part de l'extrémité pointue (16) de la goutte (14) vers l'extrémité arrondie (15) de la goutte (14), essentiellement opposée, et que la hauteur (H) des gouttes (14) est sélectionnée plus petite sur le corps de base (13) que la largeur (B) de la fente annulaire (18) entre le corps de base (13) et la paroi intérieure de cylindre (17).

2. Machine à mouler par injection selon la revendication 1,
**caractérisée en ce que** les gouttes (14) sont ainsi disposées alignées sur le corps de base (13) que l'extrémité arrondie (15) respective d'une goutte (14) est placée devant, vu dans le sens de rotation de la partie de mélange (12).

3. Machine à mouler par injection selon l'une des revendications précédentes,
**caractérisée en ce que** l'axe longitudinal de goutte (L_{T}) respectif d'une goutte (14) forme avec l'axe longitudinal (A) de la vis sans fin (5), un angle α de 45° à 90°.

4. Machine à mouler par injection selon la revendication 3,
**caractérisée en ce que** l'axe longitudinal de goutte (L_{T}) respectif d'une goutte (14) forme avec l'axe longitudinal (A) de la vis sans fin, un angle α de 60° à 85°, de préférence de 70° à 73°.

5. Machine à mouler par injection selon l'une des revendications précédentes,
**caractérisée en ce que** vu dans le sens longitudinal de la partie de mélange (12), plusieurs gouttes (14) sont disposées l'une derrière l'autre sur le corps de base (13) et ces gouttes (14) forment une rangée (R) de gouttes (14a, 14b, 14c), et que vu sur le pourtour du corps de base (13), plusieurs de ces rangées (R) de gouttes (14) sont disposées les unes à côté des autres.

6. Machine à mouler par injection selon la revendication 5,
**caractérisée en ce que** les gouttes (14) dans des rangées (R) voisines sont disposées décalées entre elles vu dans le sens longitudinal de la partie de mélange (12).

7. Machine à mouler par injection selon la revendication 5 ou 6,
**caractérisée en ce que** l'axe longitudinal (L_{R}) des rangées de gouttes (14) forme un angle avec l'axe longitudinal (A) de la vis sans fin (5).

8. Machine à mouler par injection selon la revendication 1,
**caractérisée en ce que** plusieurs gouttes (14) présentent une orientation différente entre elles, respectivement sont disposées sur le corps de base (13) avec une position différente de leur axe longitudinal de goutte (L_{T}) entre eux.

9. Machine à mouler par injection selon la revendication 8,
**caractérisée en ce que** l'orientation des gouttes (14) est choisie en alternance respectivement dans un angle supérieur à, respectivement inférieur à, 90° par rapport à l'axe longitudinal (A) de la vis sans fin de telle sorte que l'axe longitudinal de goutte (L_{T}) respectif des gouttes (14) repose en alternance une fois dans un angle supérieur et une fois dans un angle inférieur à 90° par rapport l'axe longitudinal (A) de la vis sans fin.

10. Machine à mouler par injection selon la revendication 8,
**caractérisée en ce que** des gouttes (14A, 14B) avec un alignement opposé sont disposées sur le corps de base (13), dans laquelle il y a d'une part des gouttes (14A) dont l'extrémité arrondie (15) est placée devant vu dans le sens de rotation de la partie de mélange (12), et dans laquelle il y a d'autre part des gouttes (14B) dont l'extrémité pointue (16) est placée devant vu dans le sens de rotation de la partie de mélange (12).

11. Machine à mouler par injection selon l'une des revendications précédentes,
**caractérisée en ce que** l'arbre de vis sans fin présente une surface lisse au niveau de l'anti-retour (11) ou que le manche (21) de l'anti-retour (11) présente une surface lisse.

12. Machine à mouler par injection selon l'une des revendications précédentes,
**caractérisée en ce que** l'anti-retour (11) est formé en tant qu'anti-retour annulaire et présente une bague de blocage (23) essentiellement en forme de manchon et que la bague de blocage (23) présente une surface lisse sur sa face intérieure.

13. Machine à mouler par injection selon l'une des revendications précédentes,
**caractérisée en ce que** la hauteur (H) des gouttes (14) est ainsi choisie que la face supérieure des gouttes (14) est légèrement écartée de la paroi intérieure de cylindre (17), dans laquelle de préférence, la distance entre la face supérieure des gouttes (14) et la paroi intérieure de cylindre (17) est située dans la plage de 0,02 à 2 mm, de préférence dans la plage de 0,1 à 0,5 mm.

14. Machine à mouler par injection selon la revendication 13,
**caractérisée en ce que** la hauteur (H) des gouttes (14) fait 80 % - 99 % de la largeur (B) de la fente annulaire (18) entre le corps de base (13) et la paroi intérieure de cylindre (17).

15. Machine à mouler par injection selon l'une des revendications précédentes,
**caractérisée en ce qu'**outre les éléments de mélange (14) en forme de gouttes, d'autres éléments de mélange avec une autre forme sont prévus, en particulier des éléments de mélange (25) en forme de losange, dans laquelle vu de préférence dans le sens longitudinal de la partie de mélange (12), des éléments de mélange (14) en forme de gouttes et des éléments de mélange avec l'autre forme, en particulier des éléments de mélange (25) en forme de losange, sont prévus en alternance.
